# EUROPÄISCHE PATENTSCHRIFT

(11) **EP 0 666 661 B1**
(45) Veröffentlichungstag und Bekanntmachung des Hinweises auf die Patenterteilung: **10.12.2003**
(21) Anmeldenummer: 95100524.8
(22) Anmeldetag: 17.01.1995
(51) Int. Cl.: H04L 5/06, H04L 27/26, H04L 27/00, H04H 1/00

(54) **Verfahren zur Erkennung eines Übertragungsmodes bei einem digitalen Mehrkanalübertragungssystem**
Method for identifying the transmission mode in a digital multi-channel transmission system
Procédé pour identifier le mode de transmission dans un système de transmission numérique à canaux multiples

(30) Priorität: 04.02.1994 DE 4403408
(43) Veröffentlichungstag der Anmeldung: 09.08.1995
(73) Patentinhaber: GRUNDIG Aktiengesellschaft, 90471 Nürnberg (DE)
(72) Erfinder: Zumkeller, Markus, Grundig E.M.V., D-90762 Fürth (DE)

(56) Entgegenhaltungen:
- EP-A- 0 689 308
- DE-C- 4 405 752
- PLENGE G: "DAB-A NEW SOUND BROADCASTING SYSTEM STATUS OF THE DEVELOPMENT - ROUTES TO ITS INTRODUCTION*" EBU REVIEW- TECHNICAL, Nr. 246, 1.April 1991, Seiten 87-111, XP000219708

## Beschreibung

Die Erfindung betrifft ein Verfahren zur Erkennung eines vom Sender gewählten Übertragungs-Modes nach dem Oberbegriff des Patentanspruchs 1.

Zur Verbesserung der Übertragungsqualität und zur besseren Nutzung der Übertragungsbandbreite werden zunehmend digitale Übertragungsverfahren eingesetzt. Bei der digitalen Rundfunkübertragung, beispielsweise beim DAB (Digital Audio Broadcasting), wird ein Mehrkanal-Übertragungsverfahren mit einer Rahmenstruktur benutzt. Die Verteilung der Übertragungsdaten erfolgt dabei nach dem aus der WO 88/00417 bekannten COFDM-Verfahren auf eine Vielzahl von Trägerfrequenzen. Dadurch kann eine Reduzierung der Datenrate für jede einzelne Trägerfrequenz und damit eine Verlängerung der Symboldauer erreicht werden. Dies führt wiederum zu einer erhöhten Störunempfindlichkeit des Übertragungsverfahrens. Weiterhin können, benutzt man ausreichend viele Trägerfrequenzen, aufgrund der großen Übertragungskapazität mehrere Programme im Zeitmultiplex übertragen werden.

Ein weiteres wesentliches Systemkennzeichen des geplanten digitalen Übertragungsverfahrens ist der Gleichwellenbetrieb der bei einer z.B. landesweiten Programmausstrahlung beteiligten Sendestationen. Das bedeutet die absolute Übereinstimmung der Modulationsinhalte sowie die frequenzstarre Kopplung der Sender, die ein identisches Programm ausstrahlen, um eine störungsfreie Decodierung der Programmdaten zu ermöglichen.

Wie aus der Veröffentlichung "Offene Fragen bei der Einführung von Digital Audio Broadcasting", erschienen in der Zeitschrift ntz, Bd. 46(1993), Heft 6, bekannt ist, steht für Europa ein Übertragungsfrequenzbereich von ca. 87 MHz bis ca. 1,5 GHz zur Diskussion. Um in einem derart großen Frequenzbereich eine optimale Anpassung des Übertragungsverfahrens an die frequenzabhängigen Übertragungseigenschaften zu erreichen, wurden verschiedene Übertragungs-Modes festgelegt.

Die Aufgabe der vorliegenden Erfindung ist es ein Verfahren anzugeben, wie unterschiedliche Übertragungs-Modes im Empfänger ohne übertragung von Steuerdaten automatisch erkannt werden können.

Diese Aufgabe wird bei einem gattungsgemäßen Verfahren durch die im Patentanspruch 1 gekennzeichneten Merkmale gelöst.

Das erfindungsgemäße Verfahren weist den Vorteil auf, daß der Übertragungs-Mode aufgrund mindestens eines Übertragungsparameters eines oder mehrerer empfangener Symbole ermittelt wird. Dadurch ist es nicht erforderlich, daß spezielle Daten übertragen werden, um im Empfänger den richtigen Übertragungs-Mode einzustellen. Die Übertragungsparameter Symbollänge, Rahmenlänge, Anzahl der zur Übertragung benutzten Trägerfrequenzen oder deren Frequenzabstand werden alternativ oder in Kombination zur Erkennung des Übertragungs-Modes verwendet.

Das Verfahren nach Anspruch 2 weist den Vorteil auf, daß durch die Verwendung des Nullsymbols eine besonders einfache Auswertung der Symboldauer möglich ist. Es ist lediglich erforderlich die Zeitdauer zu erfassen, in der keine Daten empfangen werden. Weiterhin wird durch die Auswertung des ersten übertragenen Symbols, das lediglich zur Rahmensynchronisation benötigt wird, sichergestellt, daß auch bei einem Wechsel des Übertragungs-Modes im Empfänger keine Übertragungsdaten verloren gehen, wodurch auch bei einem Programmwechsel (mit dem oftmals ein Wechsel des Übertragungsmodes einhergeht) ein unterbrechungsfreier Empfang möglich ist.

Das Verfahren nach Anspruch 3 weist den Vorteil auf, daß unmittelbar nach Erkennen des Übertragungs-Modes der Empfänger zum Empfang von Daten gemäß dem erkannten Übertragungs-Mode automatisch neu eingestellt wird. Dadurch wird ein Datenverlust aufgrund eines zumindest zeitweise falsch eingestellten Empfängers verhindert.

Die Erfindung wird im folgenden anhand der in der Zeichnung dargestellten Ausführungsform näher erläutert und beschrieben. Es zeigt:
- Fig. 1: einen Ausschnitt aus einem Übertragungsrahmen in einem ersten Übertragungs-Mode und
- Fig. 2: einen Ausschnitt aus einem Übertragungsrahmen in einem zweiten Übertragungs-Mode
- Fig. 3: eine Anordnung von Trägerfrequenzen eines Mehrkanal-Übertragungssignals über der Frequenz

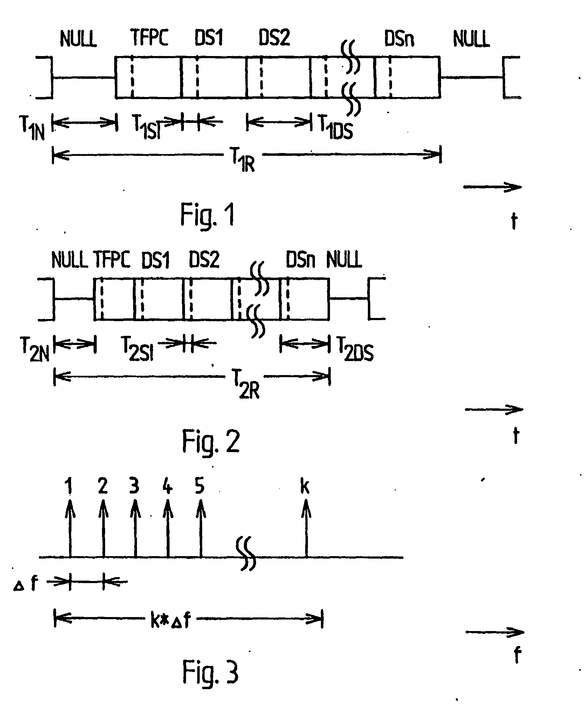

Fig. 1 zeigt ein Ausführungsbeispiel für einen Übertragungsrahmen. Dieser beginnt mit einem Null-Symbol NULL, das zur Rahmensynchronisation im Empfänger benötigt wird. Darauf folgt ein weiteres Synchronisationssymbol TFPC, das im wesentlichen der Frequenzsynchronisation dient. Anschließend folgen die Datensymbole DS1 bis DSn. Diese beginnen alle mit einem Schutzintervall, um Störungen durch Mehrwegeempfang zu verhindern.

In einem ersten Übertragungs-Mode wird das Null-Symbol NULL während einer Übertragungsdauer T_{1N} ausgesendet. Die Übertragungsdauer eines Schutzintervalls beträgt T_{1SI}, die Übertragungsdauer eines Datensymbols DS beträgt T_{1DS} und die Übertragungsdauer eines Übertragungsrahmens T_{1R}.

Fig. 2 zeigt einen Übertragungsrahmen, der in einem zweiten Übertragungs-Mode ausgesendet wurde. Dieser Übertragungsrahmen ist prinzipiell gleich aufgebaut wie in dem ersten Übertragungsmode, weist jedoch andere Übertragungsdauern für die einzelnen Übertragungssymbole auf. Die Wahl unterschiedlicher Übertragungsdauern oder einer unterschiedlich langen Rahmendauer T_{2R} kann erforderlich sein, wenn sich beispielsweise die Eigenschaften des übertragungssystems oder des Übertragungskanals aufgrund eines anderen Übertragungsfrequenzbereichs ändern. Beispielsweise kann die Frequenzsynchronisation mit Hilfe des TFPC-Symbols bei höheren Übertragungsfrequenzen in kürzeren Zeitabständen durchgeführt werden. Dadurch ergibt sich eine kürzere Rahmendauer T_{2R}.

Weiterhin können in dem zweiten Übertragungs-Mode die Übertragungsdauer T_{2N} des Null-Symbols NULL und die Übertragungsdauer T_{2DS} eines Datensymbols sowie die Dauer des schutzintervalls T_{2SI} unterschiedlich gewählt werden.

Aufgrund der für jeden Übertragungs-Mode. spezifischen Übertragungsdauern wird im Empfänger der gegenwärtige Übertragungs-Mode erkannt, in dem der Sender die Übertragungsdaten aussendet. Hierfür wird vorteilhaft die Übertragungsdauer des Null-Symbols NULL zu Beginn eines neuen Übertragungsrahmens von einem Prozessor ausgewertet. Dabei erfaßt der Prozessor die Anzahl der Taktperioden seines Systemtaktes oder eines beliebigen Referenztaktes, in denen das Übertragungssignal nicht wechselt bzw. in denen kein Übertragungssignal empfangen wird. Diese Anzahl Taktperioden wird mit bei der Produktion abgespeicherten Referenzwerten verglichen, denen jeweils ein Übertragungs-Mode oder die in diesem Übertragungs-Mode benötigten Empfangsparameter über die Adresse im Speicher zugeordnet sind. Bei einer Übereinstimmung, innerhalb eines gewissen Toleranzbereichs, wird der zugeordnete Übertragungs-Mode erkannt und die entsprechenden Empfangsparameter im Empfänger durch den bereits für den Vergleich benutzten Prozessor eingestellt.

Auf diese Weise kann auch die Übertragungsdauer von Übertragungssymbolgruppen erkannt werden. Es wird die Anzahl Taktperioden des auswertenden Prozessors zwischen zwei gleichen Symbolen, z.B. Null-Symbolen NULL, gezählt und mit gespeicherten Werten verglichen. Bei einer näherungsweisen Übereinstimmung wird der Übertragungs-Mode erkannt, der der bei dem Vergleich erkannten Übertragungsdauer zugeordnet ist.

Da der Übertragungs-Mode nicht während der Übertragung eines Übertragungsrahmens, sondern nur an dessen Anfang bzw. Ende gewechselt wird, ist dadurch sichergestellt, daß unmittelbar nach einem Wechsel des Übertragungs-Modes keine Übertragungsdaten verlorengehen. Auch bei einem Wechsel in einen anderen Übertragungsfrequenzbereich kann empfängerseitig mit dem ersten empfangenen Symbol aufgrund der detektierten Übertragungsparameter ein neuer Übertragungs-Mode eingestellt werden.

Wurde ein neuer Übertragungs-Mode aufgrund der Dauer des Null-Symbols NULL erkannt, werden im Empfänger die für einen störungsfreien Empfang erforderlichen Parameter durch einen Prozessor geändert.

Alternativ zur Übertragungsdauer von Symbolen kann auch die Anzahl k der vom Sender für die Übertragung benutzten Trägerfrequenzen oder der Frequenzabstand Δ f zwischen benachbarten Trägerfrequenzen zur Erkennung des benutzten Übertragungs-Modes ausgewertet werden. Da im Rahmen der Weiterverarbeitung der Empfangsdaten ohnehin deren Fouriertransformation erforderlich ist, kann ohne wesentlichen Mehraufwand nach der Fouriertransformation sowohl der Frequenzabstand Δf zwischen benachbarten Trägerfrequenzen als auch die Anzahl k der empfangenen Trägerfrequenzen von dem die Fouriertransformation durchführenden Prozessor bestimmt werden. Die derart ermittelten Werte für diese Übertragungsparameter können mit entsprechenden Werten, denen jeweils ein Übertragungs-Mode zugeordnet ist, verglichen werden und bei einer Übereinstimmung, innerhalb eines gewissen Toleranzbereichs, ein Übertragungs-Mode erkannt werden.

## Patentansprüche

1. Verfahren zur Erkennung eines Übertragungsmodes bei einem rahmenorientierten digitalen Mehrkanal - Übertragungsverfahren
**dadurch gekennzeichnet, dass**
ein Übertragungs-Mode auf Grund der Übertragungsdauer von Übertragungssysmbolen (T_{1DS}, T_{2DS}) oder der Dauer von Gruppensymbolen (T_{1R}, T_{2R}) durch den Abstand zwischen zwei Symbolen, oder der Anzahl (k) übertragener Trägerfrequenzen (1, ...., k) oder der Frequenzabstände (Δf) benachbarter Trägerfrequenzen erkannt wird.

2. Verfahren nach Anspruch,
**dadurch gekennzeichnet dass**
die Übertragungsdauer (T_{1N}, T_{2N}) eines Null-Symbols (NULL) ausgewertet wird.

3. Verfahren nach Anspruch 2,
**dadurch gekennzeichnet, dass**
in Abhängigkeit von einem neu erkannten Übertragungs-Mode Empfangsparameter des Empfängers neu eingestellt werden.

## Claims

1. Method of recognizing a transmission mode in a frame-oriented digital multichannel transmission method,
**characterized in that**
a transmission mode is recognized on the basis of the transmission duration of transmission symbols (T_{1DS}, T_{2DS}) or of the duration of group symbols (T_{1R}, T_{2R}) by means of the interval between two symbols, or of the number (k) of transmitted carrier frequencies (1, ..., k) or of the frequency spacings (Δf) of adjacent carrier frequencies.

2. Method according to Claim 1,
**characterized in that**
the transmission duration (T_{1N}, T_{2N}) of a zero symbol (NULL) is evaluated.

3. Method according to Claim 2,
**characterized in that**
receiving parameters of the receiver are re-set as a function of a newly recognized transmission mode.

## Revendications

1. Procédé pour identifier un mode de transmission dans un procédé de transmission numérique à canaux multiples orienté trame, **caractérisé en ce que** le mode de transmission est identifié, sur la base de la durée de transmission de symboles de transmission (T_{1DS} T_{2DS}) ou de la durée de symboles de groupes (T_{1R}, T_{2R}) par la distance entre deux symboles, ou sur la base du nombre (k) de fréquences porteuses transmises (1, ..., k) ou des écarts en fréquences (Δs) entre des fréquences porteuses voisines.

2. Procédé selon la revendication 1, **caractérisé en ce que** la durée de transmission (T_{1N}, T_{2N}) d'un symbole zéro (ZERO) est évaluée.

3. Procédé selon la revendication 2, **caractérisé en ce que** des paramètres de réception du récepteur sont à nouveau réglés en fonction d'un mode de transmission nouvellement identifié.
